(19) Europäisches Patentamt
European Patent Office
Office européen des brevets

(11) **EP 2 351 241 B1**

(12) **FASCICULE DE BREVET EUROPEEN**

(45) Date de publication et mention de la délivrance du brevet:
**06.09.2017 Bulletin 2017/36**

(21) Numéro de dépôt: **09753150.3**

(22) Date de dépôt: **28.09.2009**

(51) Int Cl.:
*H04B 3/46* (2015.01)   *H04L 27/26* (2006.01)
*H04L 5/00* (2006.01)

(86) Numéro de dépôt international:
**PCT/FR2009/051837**

(87) Numéro de publication internationale:
**WO 2010/037957 (08.04.2010 Gazette 2010/14)**

(54) **PROCEDE D'EMISSION TENANT COMPTE DE L'ECHO**

DAS ECHO BERÜCKSICHTIGENDES ÜBERTRAGUNGSVERFAHREN

TRANSMISSION METHOD TAKING ECHO INTO ACCOUNT

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.09.2008 FR 0856601**

(43) Date de publication de la demande:
**03.08.2011 Bulletin 2011/31**

(73) Titulaire: **Orange**
**75015 Paris (FR)**

(72) Inventeurs:
• **AVRIL, Gautier**
  **F-27230 Saint Aubin De Scellon (FR)**

• **PAGANI, Pascal**
  **F-22200 Guingamp (FR)**

(74) Mandataire: **Millet, Sandrine et al**
**Orange**
**IMTW/OLPS/IPL/PAT**
**Orange Gardens**
**44 Avenue de la République**
**CS 50010**
**92326 Châtillon Cedex (FR)**

(56) Documents cités:
**WO-A-2005/071853      DE-A1- 10 059 174**
**US-A1- 2005 063 323      US-B1- 6 292 559**

**Description**

La présente invention se rapporte au domaine des télécommunications. Au sein de ce domaine, l'invention se rapporte plus particulièrement aux communications dites numériques.

Les communications numériques comprennent en particulier les communications filaires. La transmission de la communication est effectuée par un canal de transmission appelé parfois canal de propagation qui relie un émetteur et un récepteur. Le canal de transmission correspond à la liaison physique entre l'émetteur et le récepteur. Cette liaison est définie par certains paramètres et notamment par la nature de la liaison (filaire, radio,...). Certains équipements intermédiaires tels que des coupleurs ou des répéteurs sont considérés comme faisant partie du canal de transmission. En effet, ces équipements participent uniquement à la transmission du signal physique et sont transparents du point de vue des émetteurs et des récepteurs.

L'invention se place dans le contexte d'un système comprenant au moins un dispositif émetteur A ayant des capacités locales de réception et un récepteur B distant. Le canal de transmission est défini pour chaque couple émetteur - récepteur distant. Dans une utilisation de diffusion, broadcast, avec un émetteur et plusieurs récepteurs, il y a autant de canaux de transmission que de récepteurs.

La transmission peut être soumise à divers phénomènes et notamment à des phénomènes de réflexion. Le signal émis par le dispositif émetteur est réfléchi, typiquement au niveau des terminaisons et des jonctions pour un canal filaire ou au niveau d'obstacles pour un canal radio. Ces réflexions font qu'une partie de la puissance émise par le dispositif émetteur revient au niveau du dispositif émetteur. Nous utiliserons le terme d'écho pour désigner cette puissance retournée au niveau de l'émetteur.

Le canal de transmission entre un émetteur A et un récepteur B peut être caractérisé par un ensemble de fonctions de transfert qui permettent de déterminer l'effet du canal sur un signal émis par l'émetteur A : $h_{AA}$, $h_{BA}$,. De manière classique, une fonction de transfert est une suite de valeurs complexes qui expriment l'atténuation et le déphasage du signal pour chaque fréquence. Ainsi, la fonction de transfert $h_{BA}$ permet de déterminer le signal reçu au point B en fonction du signal émis au point A en appliquant une atténuation et un déphasage pour l'ensemble des fréquences. Et, la fonction de transfert $h_{AA}$ permet de déterminer le signal reçu au point A en fonction du signal émis au point A.

Dans la suite du document, on appelle $h_{BA}$ la fonction de transmission de A vers B et $h_{AA}$ la fonction d'écho de A vers A. Ces fonctions peuvent être variables en fonction de la fréquence.

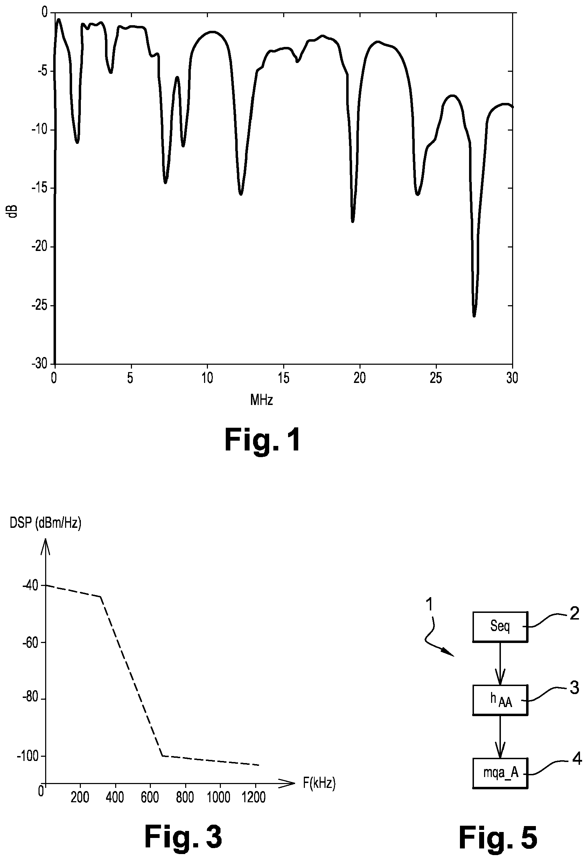

L'invention s'applique plus particulièrement à une transmission par courant porteur en ligne, communément désignée par les sigles CPL ou PLT (Power Line Transmission). Selon cette application, les réflexions interviennent en particulier aux interfaces électriques, typiquement au niveau des prises murales, des tableaux de dérivation etc. La figure 1 se rapporte à une installation électrique particulière comprenant un émetteur et un récepteur distant. La figure 1 illustre le niveau de l'amplitude de la fonction d'écho, exprimée en dB, au niveau de l'émetteur, dans le cas d'une transmission CPL à destination du récepteur distant.

L'invention n'est cependant pas limitée à ce type de transmission par courant porteur et peut trouver application à d'autres types de transmission filaire ainsi qu'à des transmissions non filaires, en particulier par voie aérienne.

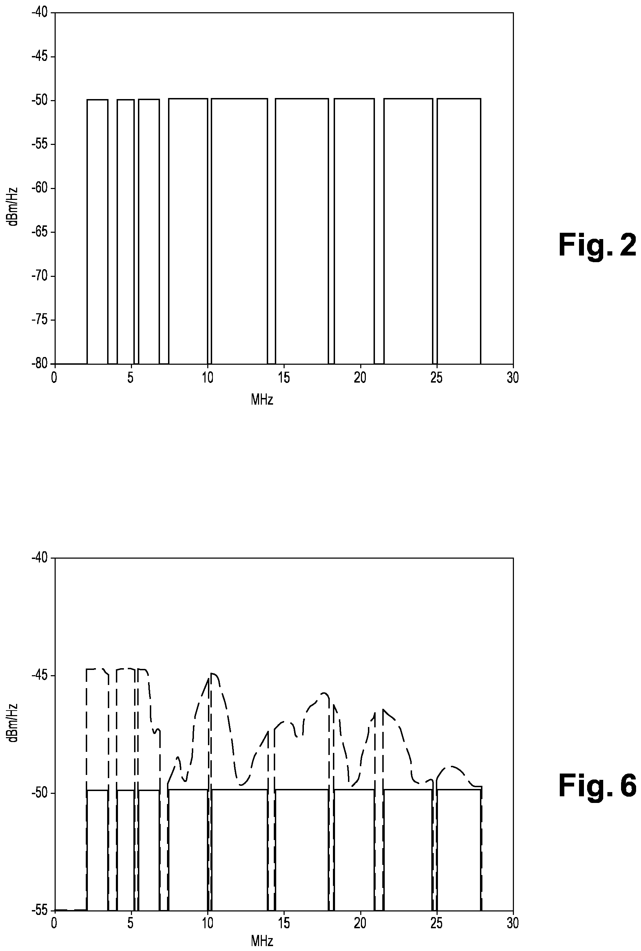

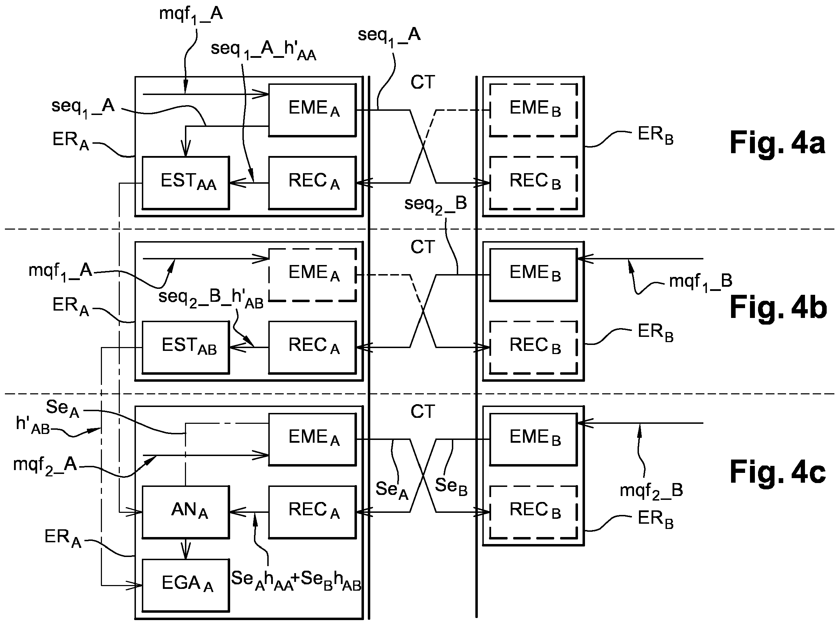

Les systèmes de télécommunication sont mis en oeuvre classiquement dans un contexte de régulation nationale ou internationale. Une autorité de régulation définit un niveau maximale de puissance $P_{lim,f}$ autorisé qui est traduit généralement sous la forme d'un masque d'émission. Ce masque est figé et impose la puissance du signal émis $P_f$. Un exemple de masque d'émission figé est illustré par la figure 2. Il est associé aux systèmes conformes à la spécification HomePlugAV définie par un groupe de membres et accessible à l'adresse internet suivante http://www.homeplug.org. La figure 3 illustre le masque d'émission associé aux systèmes conformes au standard SDSL de l'ITU. WO2005/071853 concerne un système d'adaptation en temps-réel de masques de densité spectrale de puissance. En référence aux figures 4a, 4b, 4c, un système de communication numérique multiporteuse full-duplex connu de type SDSL comprend un dispositif émetteur/récepteur $ER_A$ et un dispositif émetteur/récepteur $ER_B$ distant, séparés par un canal de transmission CT.

Le signal multi porteuse émis a une densité spectrale de puissance répartie sur la bande d'émission découpée en porteuses selon les caractéristiques du système de télécommunication.

Les figures 4a, 4b, 4c représentent de manière schématique certains modules du dispositif émetteur/récepteur $ER_A$ et du dispositif émetteur/récepteur $ER_B$, pour différents instants d'un processus d'émission d'un signal multi porteuse entre le dispositif émetteur/récepteur $ER_A$ et le dispositif émetteur/récepteur $ER_B$. Le dispositif émetteur/récepteur $ER_A$ comprend un module $EME_A$ d'émission, un module $REC_A$ de réception, un module $EST_{BA}$ d'estimation de la fonction de transmission $h_{BA}$, un module $EST_{AA}$ d'estimation de la fonction d'écho $h'_{AA}$, un module $AN_A$ d'annulation d'écho, un module $EGA_A$ d'égalisation du canal. Le dispositif émetteur/récepteur $ER_B$ comprend un module $EME_B$ d'émission, un module $REC_B$ de réception.

Lors de l'émission d'une première séquence $seq_{1\_A}$ multi porteuse particulière par le module $EME_A$ d'émission, figure 4a, à un niveau de puissance déterminé selon un masque de puissance figé $mqf_{1\_A}$, le canal CT de transmission transmet le signal émis dont une partie est reçue par le module $REC_B$ de réception. Une partie de la puissance du signal émis est retournée et reçu par le module $REC_A$ de réception. Cette partie correspond au signal émis $seq_{1\_}A$ atténué et déphasé pour l'ensemble des fréquences par la fonction d'écho $h'_{AA}$. Le module $EST_{AA}$ d'estimation estime cette fonction d'écho connaissant le signal émis $seq_{1\_}A$ et le signal retourné reçu $seq_{1\_}A\_h'_{AA}$ fourni par le module $REC_A$ de réception.

Lors de l'émission d'une seconde séquence $Seq_{2\_}B$ multi porteuse particulière, figure 4b, connue du dispositif émetteur/récepteur $ER_A$, à un niveau de puissance déterminé selon un masque de puissance figé $mqf_{1\_}B$, par le module $EME_B$ d'émission du dispositif émetteur/récepteur $ER_B$, le signal transmis par le canal CT de transmission est reçu par le module $REC_A$ de réception du dispositif émetteur/récepteur $ER_A$. Ce signal reçu correspond à la seconde séquence $Seq_{2\_}B$ atténuée et déphasée pour l'ensemble des fréquences par la fonction de transmission $h'_{AB}$. Le module $EST_{AB}$ d'estimation estime cette fonction de transmission $h'_{AB}$ connaissant la seconde séquence multi porteuse particulière $seq_{2\_}B$ et le signal transmis reçu fourni $seq_{2\_}B\_h'_{AB}$ par le module $REC_A$ de réception.

Lors d'une transmission en full-duplex, figure 4c, chacun des deux modules $EME_A$ et $EME_B$ d'émission des dispositifs émetteur/récepteur respectivement $ER_A$ et $ER_B$ émettent simultanément un signal multi porteuse $Se_A$, $Se_B$, à un niveau de puissance déterminé selon un masque respectif de puissance figé $mqf_{2\_}A$, $mqf_{2\_}B$. Le module $REC_A$ de réception du dispositif émetteur/récepteur $ER_A$ reçoit le signal transmis par le canal CT de transmission du fait de l'émission par le dispositif émetteur/récepteur $ER_B$ et l'écho du fait de l'émission simultanée par le dispositif émetteur/récepteur $ER_A$. Le module $AN_A$ d'annulation d'écho annule cet écho du signal reçu. L'annulation consiste à soustraire l'écho reçu du signal reçu $Se_A \times h_{AA} + Se_B \times h_{AB}$ fourni par le module de réception $REC_A$. Pour évaluer l'écho reçu $Se_A\_h_{AA}=Se_A \times h_{AA}$, le module d'annulation $AN_A$ fait l'approximation que la fonction d'écho $h_{AA}$ est identique à la fonction d'écho $h'_{AA}$ estimée lors de l'émission d'une première séquence connue. Le module d'annulation $AN_A$ soustrait donc le signal émis $Se_A$ atténué et déphasé pour l'ensemble des fréquences par $h'_{AA}$, du signal reçu. Le module d'égalisation $EGA_A$ du canal évalue le signal émis $Se_B$, par exemple en divisant le signal fourni en sortie du module d'annulation $AN_A$ par le coefficient $h'_{AB}$. Le module d'égalisation $EGA_A$ fait l'approximation que la fonction de transmission $h_{AB}$ est identique à la fonction de transmission $h'_{AB}$ estimée lors de l'émission d'une seconde séquence particulière $seq_{2\_}B$.

Dans ce système de communication numérique multi porteuse connu de type SDSL, le module d'annulation d'écho intervient lors de communications en mode full-duplex.

Le composant PEB 22622 (SOCRATES) de la société Infineon est adapté pour un système SDSL et comprend les modules d'un dispositif émetteur/récepteur précédemment décrit.

L'écho, résultant du phénomène de réflexion intervenant lors de la transmission, peut perturber le module de réception d'un dispositif émetteur/récepteur, dans un mode full-duplex. Pour lutter contre cette perturbation, le module de réception du dispositif émetteur/récepteur annule l'écho, au moyen d'un module d'annulation d'écho, en estimant l'écho en tenant compte d'une fonction d'écho préalablement estimée et du signal émis.

En ce qui concerne le signal reçu par le module de réception d'un dispositif émetteur/récepteur distant, il est amputé par rapport au signal émis de la puissance de l'écho.

L'invention se propose de lutter contre la perte de puissance entre le signal émis par le dispositif émetteur/récepteur et le signal reçu par le récepteur distant.

L'invention a pour objet un procédé d'émission d'un signal multi porteuse utilisant un masque de puissance d'émission, le signal émis étant transmis par un canal de transmission séparant un dispositif émetteur ayant des moyens de réception d'un récepteur distant, qui comprend :

- adapter le masque de puissance d'émission en tenant compte d'une fonction d'écho, l'écho étant du à la transmission d'une séquence émise par le dispositif émetteur et connue des moyens de réception, pour tenir compte de la puissance perdue du fait de l'écho.

En remplaçant le masque de puissance figé par un masque de puissance adapté de niveau supérieur, la puissance reçue par le récepteur distant est supérieure à celle reçue en l'absence de masque adapté, ce qui permet d'augmenter les débits et/ou la qualité de service.

En outre, l'invention a pour objet un dispositif émetteur d'un signal multi porteuse mettant en oeuvre un masque de puissance d'émission, le signal émis étant transmis par un canal de transmission séparant le dispositif émetteur d'un récepteur distant, qui comprend au moins :

- un module de réception adapté à recevoir un écho correspondant à une séquence connue,
- un module d'émission pour émettre la séquence connue,
- un module d'estimation d'une fonction d'écho caractérisant un canal de transmission de l'écho, écho du à la transmission de la séquence connue,
- un module d'adaptation du masque de puissance pour tenir compte de la puissance de l'écho estimée à partir de la fonction d'écho.

En outre, l'invention a pour objet un système de télécommunication comprenant un dispositif émetteur selon l'objet précédent et un dispositif récepteur distant, un canal de transmission séparant le dispositif émetteur et le récepteur distant.

En remplaçant le masque de puissance figé par un masque de puissance adapté, un dispositif et un système selon l'invention permettent d'augmenter la puissance reçue par le récepteur distant en tenant compte de la perte de puissance, du fait de la puissance de l'écho, lors de la détermination de la puissance à émettre.

Le procédé, le dispositif d'émission et le système conformes à l'invention permettent de lutter contre l'effet induit par l'écho. En effet, en tenant compte de la puissance de l'écho pour ajuster la puissance émise, le signal reçu par le récepteur distant bénéficie d'un niveau de puissance maximal. Ainsi, le signal est émis avec un niveau de puissance supérieur au niveau de puissance reçu par le récepteur pour tenir compte de la puissance retournée du fait de l'écho.

Selon un mode de réalisation particulier, le procédé comprend en outre :

- émettre la séquence connue par le dispositif émetteur, pour une transmission par le canal de transmission,
- estimer la fonction d'écho, par les moyens de réception, en évaluant le rapport entre la séquence connue émise et la séquence reçue par les moyens de réception.

L'émission d'une séquence connue et l'estimation de la fonction d'écho peuvent être mises en oeuvre préalablement, de manière systématique ou occasionnelle, à l'adaptation de puissance. Elles peuvent se dérouler lors d'une phase d'initialisation du dispositif émetteur ce qui permet d'optimiser le temps de communication. Elles peuvent tout aussi bien se dérouler à d'autres instants pour permettre une mise à jour du masque d'émission.

En ce qui concerne ce dernier mode de réalisation particulier, l'émission de la séquence connue, l'estimation de la fonction d'écho et l'adaptation du masque de puissance peuvent être effectuées régulièrement à des instants déterminés en relation avec les instants d'émission d'un signal de communication par le dispositif émetteur.

En synchronisant les instants d'émission de la séquence déterminée, et donc d'estimation de la fonction d'écho, et les instants où le dispositif émetteur émet un signal correspondant à des données de communication, ceci permet de tenir compte des évolutions des caractéristiques du canal de transmission, qui se traduisent par une modification de la fonction d'écho $h_{AA}$, lors de l'émission du signal.

Selon un mode de réalisation particulier, la séquence connue correspond à tout ou partie d'un signal de communication émis par le dispositif émetteur.

L'utilisation des données permet très avantageusement de limiter les pertes de débit dues à l'envoi d'une séquence prédéterminée ne transportant pas de données utiles.

Selon un mode de réalisation particulier, le masque de puissance est adapté par porteuse.

Ceci permet de tenir compte du fait que le canal de transmission peut varier en fonction de la fréquence et/ou que l'amplification de l'émetteur peut être fonction de la fréquence.

Selon un mode de réalisation particulier, plusieurs masques de puissance sont définis et sélectionnés de façon périodique.

En particulier, la sélection est effectuée de façon périodique par rapport au cycle de la tension du secteur électrique qui alimente le dispositif émetteur. Ceci permet de tenir compte des variations périodiques, de la fonction d'écho, synchrones avec la tension électrique du secteur (50 Hz par exemple).

Selon un mode de réalisation particulier, l'adaptation du masque de puissance tient compte d'une variation périodique de la fonction d'écho, en prenant en compte, pour une fréquence donnée, une valeur minimale sur la période de l'ensemble des fonctions d'écho.

Ceci permet de tenir compte des variations périodiques synchrones avec la tension du secteur (50 Hz par exemple) de la fonction d'écho en s'assurant que la puissance émise ne dépasse jamais le masque considéré.

Selon un mode de réalisation particulier, le masque de puissance adapté est déterminé en ajoutant à un masque figé de puissance une puissance estimée de l'écho.

Cette détermination permet d'optimiser la puissance du signal reçu en émettant au moins la puissance correspondant à un masque figé augmentée si besoin pour compenser la puissance de l'écho. Ceci permet de prendre en compte une contrainte qui est typiquement associée à une entité de régulation nationale ou internationale qui détermine un niveau maximal de puissance reçue.

Selon un mode de réalisation particulier, le masque de puissance adapté est borné à une valeur maximale sur tout ou partie des fréquences.

Cette limitation permet de prendre en compte une limitation des capacités d'amplification du système.

Selon un mode de réalisation particulier, la puissance d'émission adaptée est limitée par une marge prenant en compte une erreur d'estimation de la fonction d'écho.

Cette limitation permet de prendre en compte une erreur d'estimation de la fonction d'écho.

Les différents modes de réalisation précédents peuvent être combinés ou pas avec un ou plusieurs de ces modes pour définir un autre mode de réalisation.

D'autres caractéristiques et avantages de l'invention apparaîtront lors de la description qui suit faite en regard de figures annexées données à titre d'exemples non limitatifs.

La figure 1 est la représentation graphique d'une réflexion de canal observée entre un émetteur et un récepteur dans un domicile particulier lors d'une communication de type CPL.

La figure 2 est la représentation graphique d'un masque de puissance figé conforme à la spécification HomePlugAV.

La figure 3 est la représentation graphique d'un masque de puissance figé conforme au standard SDSL.

Les figures 4a, 4b, 4c, représentent schématiquement un système de communication numérique multi porteuse connu de type SDSL comprenant un dispositif émetteur/récepteur $ER_A$ et un dispositif émetteur/récepteur $ER_B$ distant, séparés par un canal de transmission CT.

La figure 5 est un organigramme d'une réalisation particulière d'un procédé selon l'invention.

La figure 6 représente un masque de puissance adapté, la courbe en pointillés, correspondant au masque de puissance figé de la figure 2, dans le cas où la capacité d'amplification du dispositif émetteur/récepteur est limitée à -45dBm/Hertz.

Les figures 7a, 7b, 7c, représentent schématiquement un exemple d'un système de communication numérique multi porteuse adapté selon l'invention comprenant un dispositif émetteur/récepteur $ER_A$ adapté selon l'invention et un dispositif émetteur/récepteur $ER_B$ distant, séparés par un canal de transmission CT.

Un module représenté sur différentes figures avec une même référence assure la même fonction.

En référence à la figure 5, un procédé d'émission d'un signal multi porteuse, selon l'invention, utilise un masque de puissance. Le signal émis est transmis par un canal de transmission séparant un dispositif émetteur A ayant des moyens de réception d'un récepteur distant B. La figure 5 illustre une réalisation particulière d'un procédé selon l'invention.

Le procédé 1 comprend une émission 2 d'une séquence connue, une estimation 3 de la fonction d'écho et une adaptation 4 du masque de puissance. Les étapes d'émission 2 et d'estimation 3 peuvent n'être mises en oeuvre que lors d'une phase d'initialisation du dispositif émetteur. Dans ce cas, le procédé d'émission selon l'invention met alors uniquement en oeuvre l'adaptation du masque en dehors de la phase d'initialisation. Selon d'autres réalisations, l'étape d'adaptation 4 peut être précédée des étapes d'émission 2 et d'estimation 3 de manière systématique ou non, en particulier, uniquement sous certaines conditions telles un changement de paramètres de configuration du dispositif émetteur (par exemple un changement de fréquence RF (radio frequency), un changement de durée de symboles émis,...) ou lors de la détection d'un changement des caractéristiques du canal de transmission.

En outre, le procédé peut comprendre d'autres actions en fonction des modes de réalisation.

L'émission 2 d'une séquence connue Seq est effectuée par le dispositif émetteur ayant des moyens de réception.

La transmission de cette séquence Seq sur le canal de transmission peut être soumise à divers phénomènes d'atténuation et de réflexion qui se traduisent par un écho.

La fonction d'écho du canal de transmission h'$_{AA}$, du à la transmission de la séquence connue Seq, est estimé 3 par le dispositif émetteur à l'aide de ses moyens de réception et de leur connaissance de la séquence émise Seq. Dans le cas où le canal est susceptible de subir des variations périodiques, et notamment des variations périodiques synchrones avec la tension du secteur électrique, le procédé peut de manière complémentaire déterminer l'évolution dans le temps de la fonction d'écho au cours de cette période. Et pour différents instants, le procédé détermine différents masques de puissance adaptés à la fonction d'écho correspondant à cet instant. En outre, le procédé peut déterminer une fonction d'écho minimale, correspondant pour chaque fréquence à la valeur minimale des fonctions d'écho pour l'ensemble des valeurs de phase de la tension du secteur, donc une valeur minimale des différentes fonction d'écho déterminées sur une période.

La séquence Seq peut être soit une séquence spécialement conçue pour déterminer la fonction d'écho du canal, soit une séquence de données émises lors de la transmission d'un signal de communication de A vers B.

Le masque de puissance utilisé pour émettre un signal de communication est adapté 4 pour tenir compte de la puissance d'un écho estimé à partir de la fonction d'écho. Typiquement, le dispositif émetteur émet un signal avec une puissance déterminée telle que la puissance reçue en n'importe quel endroit du réseau électrique ne puisse pas dépasser un certain masque de puissance, généralement déterminé par un standard et/ou un organisme de régulation. Classiquement, le dispositif émetteur émet conformément à ce masque figé. La figure 2 est la représentation graphique d'un masque de puissance figé conforme à la spécification HomePlugAV. La figure 3 est la représentation graphique d'un masque de puissance figé conforme au standard SDSL.

L'adaptation 4 du masque selon l'invention consiste typiquement à augmenter le niveau émis relativement au masque figé pour tenir compte de la puissance d'un écho, estimée à partir de la fonction d'écho h'$_{AA}$ appliquée au signal émis.

Le signal émis étant multi porteuse, le masque de puissance est typiquement adapté dans le domaine fréquentiel, par porteuse. Typiquement, cette adaptation consiste à ajouter au masque figé la puissance perdue retournée par l'écho, pour une porteuse donnée. Ceci peut s'exprimer par l'équation :

$$Popt_f = P\lim_f / \left(1 - h'_{AA,f}\right) \qquad (1)$$

avec $Popt_f$ la puissance à la porteuse f du masque adapté en mW/Hertz, $P\lim_f$ la puissance à la porteuse f du masque figé en mW/Hertz, $h'_{AA,f}$ l'amplitude en linéaire de la fonction d'écho du canal de transmission à la porteuse f.

Selon un mode de réalisation, la puissance adaptée est plafonnée par le dispositif émetteur.par exemple pour tenir compte de ses capacités d'amplification. La puissance adaptée peut s'exprimer dans ce cas par l'équation :

$$Popt_f = \min\left(P\lim_f / \left(1 - h'_{AA,f}\right), P\max_f\right) \qquad (2)$$

avec $P\max_f$ la puissance maximale à la porteuse f déterminée par les capacités d'amplification du dispositif émetteur en mW/Hertz. La figure 6 représente un masque de puissance adapté correspondant au masque de puissance figé de la figure 2, dans le cas où la capacité d'amplification du dispositif émetteur/récepteur est limitée à -45dBm/Hertz. Le masque de puissance adapté correspond à la courbe en traits discontinus.

Selon un mode de réalisation particulier, la puissance adaptée est atténuée pour prendre en compte une marge d'erreur lors de l'estimation de la fonction d'écho $h'_{AA}$.

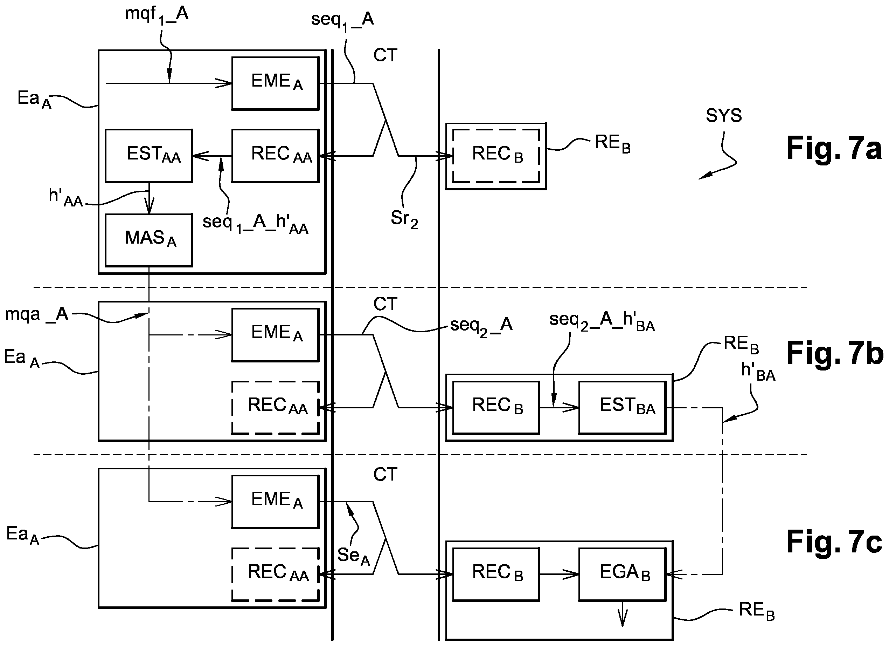

Les figures 7a, 7b, 7c, représentent schématiquement un exemple d'un système de communication SYS numérique multi porteuse selon l'invention, comprenant un dispositif émetteur adapté $Ea_A$ selon l'invention et un dispositif récepteur $RE_B$ distant, séparés par un canal de transmission CT. Les figures 7a, 7b, 7c représentent de manière schématique certains modules du dispositif émetteur adapté $Ea_A$ et du dispositif récepteur $RE_B$ pour différents instants d'un processus d'émission d'un signal multi porteuse entre le dispositif émetteur adapté $Ea_A$ et le dispositif récepteur $RE_B$.

Le dispositif émetteur adapté $Ea_A$ comprend un module $EME_A$ d'émission, un module $REC_{AA}$ de réception, un module $EST_{AA}$ d'estimation de la fonction d'écho de A vers A, un module de calcul d'un masque de puissance adapté $MAS_A$. Le dispositif récepteur $RE_B$ comprend un module $REC_B$ de réception, un module d'estimation de la fonction de transmission de A vers B ($EST_{BA}$) et un module d'égalisation $EGA_B$.

Lors de l'émission d'une première séquence $Seq_{1\_}A$ multi porteuse par le module $EME_A$ d'émission, figure 7a, à un niveau de puissance déterminé typiquement selon un masque de puissance figé $mqf_{1\_}A$, le canal CT de transmission transmet le signal émis dont une partie est reçue par le module $REC_B$ de réception. Une partie de la puissance du signal émis est retournée et reçue par le module $REC_{AA}$ de réception. Cette partie correspond au signal émis $seq_{1\_}A$ atténué et déphasé pour l'ensemble des fréquences par la fonction d'écho $h'_{AA}$ correspondant à l'instant d'émission du signal émis. Le module $EST_{AA}$ d'estimation estime cette fonction d'écho connaissant le signal émis $seq_{1\_}A$ et le signal retourné reçu fourni $seq_{1\_}A\_h'_{AA}$ par le module $REC_{AA}$ de réception.

Le dispositif émetteur $Ea_A$ est adapté en ce que le module de réception $REC_{AA}$ peut consister en des moyens de réception adaptés et limités à recevoir l'écho et en ce qu'il comprend un module de calcul d'un masque de puissance adapté $MAS_A$. Le masque de puissance utilisé pour émettre un signal de communication est adapté pour tenir compte de la puissance d'un écho estimé à partir de la fonction d'écho $h'_{AA}$. Le calcul du masque adapté $mqa\_A$ effectué par le module $MAS_A$ consiste typiquement à augmenter le niveau émis relativement à un masque figé pour tenir compte de la puissance d'un écho, estimé à partir de la fonction d'écho $h'_{AA}$ appliqué au signal émis.

Le signal émis étant multi porteuse, le calcul du masque de puissance effectué par le module $MAS_A$ est typiquement effectué dans le domaine fréquentiel, par porteuse. Typiquement, ce calcul consiste à ajouter au masque figé la puissance estimée de l'écho, pour une porteuse donnée. Ceci peut s'exprimer par l'équation (1).

Selon un mode de réalisation du dispositif émetteur $Ea_A$ adapté, la puissance adaptée est plafonnée par le dispositif émetteur $Ea_A$ par exemple pour tenir compte de ses capacités d'amplification. La puissance adaptée peut s'exprimer dans ce cas par l'équation (2).

Lors de l'émission d'une seconde séquence $Seq_{2\_}A$ multi porteuse, figure 4b, connue du dispositif récepteur $RE_B$, à un niveau de puissance déterminé selon le masque de puissance adapté $mqa\_A$, par le module $EME_A$ d'émission du dispositif émetteur $Ea_A$, le signal transmis par le canal CT de transmission est reçu par le module $REC_B$ de réception du dispositif récepteur $RE_B$. Ce signal reçu correspond à la seconde séquence $seq_{2\_}A$ atténuée et déphasée pour l'ensemble des fréquences par la fonction de transmission du canal $h'_{BA}$. Le module $EST_{BA}$ d'estimation estime cette fonction de transmission de A vers B $h'_{BA}$ connaissant la seconde séquence multi porteuse $seq_{2\_}A$ et le signal transmis reçu fourni $seq_{2\_}A\_h'_{AB}$ par le module $REC_B$ de réception.

Lors d'une transmission de données de communication du dispositif émetteur adapté $Ea_A$ vers le dispositif récepteur $RE_B$, figure 7c, le module $EME_A$ d'émission émet un signal multi porteuse $Se_A$, à un niveau de puissance déterminé selon le masque de puissance adapté $mqa\_A$. Le module $REC_B$ de réception du dispositif récepteur $RE_B$ reçoit le signal transmis par le canal CT de transmission. Le module d'égalisation $EGA_B$ du canal, du dispositif récepteur $RE_B$, évalue le signal émis $Se_2$ en divisant le signal fourni $Se_A \times h_{BA}$ par le module de réception $REC_B$ par le coefficient h'$_{BA}$ estimé lors de l'émission d'une seconde séquence seq$_2$_A. Le module d'égalisation EGA$_B$ fait l'approximation que la fonction d'écho h$_{BA}$ est identique à la fonction d'écho h'$_{BA}$ déterminée lors de l'émission de la seconde séquence.

Selon un mode de réalisation particulier, le module de réception REC$_{AA}$ du dispositif émetteur Ea$_A$ est identique à celui utilisé pour recevoir des données en half duplex ou en full duplex dans le cas illustré par les figures 4a, 4b et 4c qui correspond à une transmission de données entre deux émetteur/récepteur.

Le module d'émission EME$_A$ du dispositif émetteur E$_{aA}$ de la figure 7a, utilisé pour l'estimation de la fonction d'écho du canal, est considéré dans la description qui précède comme le même module que celui utilisé pour l'estimation de la fonction de transmission de la figure 7b et que celui utilisé pour la transmission de données de la figure 7c. Selon un autre mode de réalisation, il peut s'agir d'un émetteur dégradé, c'est-à-dire uniquement destiné à émettre une séquence utilisée pour évaluer la fonction d'écho h'$_{AA}$ du canal.

Selon un mode de réalisation particulier, toutes les séquences de données de communication émises par le dispositif émetteur E$_{aA}$, ou seulement certaines, peuvent être utilisées pour estimer la fonction d'écho du canal, en permanence ou de manière occasionnelle. Selon ce mode, la première séquence seq$_1$_A est une séquence de données et elle est connue du module de réception REC$_{AA}$. Une estimation régulière et fréquente de la fonction d'écho, possible en utilisant les séquences de données sans perte de débit de transmission, permet d'ajuster rapidement la puissance d'émission, selon le calcul fourni par le module MAS$_A$, après détection d'une modification sensible de la fonction d'écho h'$_{AA}$.

## Revendications

1. Procédé (1) d'émission d'un signal multi porteuse utilisant un masque de puissance d'émission, le signal émis (Se$_A$) étant transmis par un canal de transmission (CT) séparant un dispositif émetteur (Ea$_A$) ayant des moyens de réception (REC$_{AA}$) d'un récepteur distant (RE$_B$), qui comprend :

   - adapter (4) le masque de puissance d'émission en l'augmentant en fonction de l'estimation d'une fonction d'écho caractérisant un écho dû à la réflexion d'une partie de la puissance d'un signal émis par le dispositif émetteur et reçu par lesdits moyens de réception, pour tenir compte de la puissance perdue du fait de l'écho.

2. Procédé (1) d'émission selon la revendication 1, comprenant en outre :

   - émettre (2) une séquence connue (Seq) par le dispositif émetteur (Ea$_A$), pour une transmission par le canal de transmission,
   - estimer (3) la fonction d'écho en évaluant le rapport entre la séquence connue émise et la séquence reçue par les moyens de réception.

3. Procédé (1) d'émission selon la revendication 2, dans lequel l'émission de la séquence connue (Seq), l'estimation de la fonction d'écho et l'adaptation du masque de puissance sont effectuées régulièrement à des instants déterminés en relation avec les instants d'émission d'un signal de communication par le dispositif émetteur (Ea$_A$).

4. Procédé (1) d'émission selon la revendication 1, dans lequel la séquence connue (Seq) correspond à tout ou partie d'un signal de communication émis par le dispositif émetteur (Ea$_A$).

5. Procédé (1) d'émission selon la revendication 1, dans lequel le masque de puissance d'émission (mqa_A) est adapté par porteuse.

6. Procédé (1) d'émission selon la revendication 1, dans lequel plusieurs masques de puissance d'émission (mqa_A) sont définis et sélectionnés de façon périodique.

7. Procédé (1) d'émission selon la revendication 1, dans lequel l'adaptation du masque de puissance d'émission tient compte d'une variation périodique de la fonction d'écho, en prenant en compte, pour une fréquence donnée, une valeur minimale sur la période de l'ensemble des fonctions d'écho.

8. Procédé (1) d'émission selon la revendication 1, dans lequel le masque de puissance adapté est déterminé en ajoutant à un masque figé de puissance d'émission (mqf$_2$_A) une puissance estimée de l'écho.

9. Procédé (1) d'émission selon la revendication 1, dans lequel le masque de puissance adapté est borné à une valeur maximale sur tout ou partie des fréquences.

**10.** Procédé (1) d'émission selon la revendication 1, dans lequel la puissance d'émission adaptée est limitée par une marge prenant en compte une erreur d'estimation de la fonction d'écho.

**11.** Dispositif émetteur (Ea$_A$) d'un signal multi porteuse mettant en oeuvre un masque de puissance d'émission, le signal émis étant transmis par un canal de transmission séparant le dispositif émetteur (Ea$_A$) d'un récepteur distant (RE$_B$), qui comprend au moins :

- un module d'émission (EME$_A$) pour émettre un signal;
- un module de réception (REC$_{AA}$)adapté à recevoir un écho correspondant au signal émis;
- un module d'estimation (EST$_{AA}$) d'une fonction d'écho (h'$_{AA}$) caractérisant un écho dû à la réflexion d'une partie de la puissance du signal émis ; et
- un module d'adaptation (MAS$_A$) du masque de puissance configuré pour augmenter ledit masque de puissance en fonction de l'estimation de la fonction d'écho, pour tenir compte de la puissance perdue du fait de l'écho.

**12.** Dispositif émetteur selon la revendication 11, dans lequel le module d'émission est configuré pour émettre une séquence connue (Seq) vers le canal de transmission, le module de réception (REC$_{AA}$) est adapté à recevoir l'écho de ladite séquence, et le module d'estimation est configuré pour estimer la fonction d'écho en évaluant le rapport entre la séquence connue et l'écho de ladite séquence.

**13.** Système de télécommunication (SYS) comprenant un dispositif émetteur (Ea$_A$) selon la revendication 11 et un dispositif récepteur distant (ER$_B$), le canal de transmission (CT) séparant le dispositif émetteur et le récepteur distant.

**Patentansprüche**

**1.** Verfahren (1) zum Senden eines Mehrträgersignals unter Verwendung einer Sendeleistungsmaske, wobei das gesendete Signal (Se$_A$) über einen Übertragungskanal (CT) übertragen wird, der eine Sendevorrichtung (Ea$_A$), die Empfangsmittel (REC$_{AA}$) aufweist, von einem entfernten Empfänger (RE$_B$) trennt, welches umfasst:

- Anpassen (4) der Sendeleistungsmaske, indem sie in Abhängigkeit von der Schätzung einer Echofunktion erhöht wird, die ein Echo charakterisiert, das auf die Reflexion eines Teils der Leistung eines von der Sendevorrichtung gesendeten und von den Empfangsmitteln empfangenen Signals zurückzuführen ist, um den Leistungsverlust aufgrund des Echos zu berücksichtigen.

**2.** Verfahren (1) zum Senden nach Anspruch 1, welches außerdem umfasst:

- Senden (2) einer bekannten Sequenz (Seq) durch die Sendevorrichtung (Ea$_A$) für eine Übertragung über den Übertragungskanal,
- Schätzen (3) der Echofunktion durch Berechnen des Verhältnisses zwischen der gesendeten bekannten Sequenz und der durch die Empfangsmittel empfangenen Sequenz.

**3.** Verfahren (1) zum Senden nach Anspruch 2, wobei das Senden der bekannten Sequenz (Seq), die Schätzung der Echofunktion und die Anpassung der Leistungsmaske regelmäßig zu bestimmten Zeitpunkten durchgeführt werden, die zu den Zeitpunkten des Sendens eines Kommunikationssignals durch die Sendevorrichtung (Ea$_A$) in Beziehung stehen.

**4.** Verfahren (1) zum Senden nach Anspruch 1, wobei die bekannte Sequenz (Seq) einem gesamten Kommunikationssignal, das durch die Sendevorrichtung (Ea$_A$) gesendet wird, oder einem Teil davon entspricht.

**5.** Verfahren (1) zum Senden nach Anspruch 1, wobei die Sendeleistungsmaske (mqa_A) an die einzelnen Träger angepasst wird.

**6.** Verfahren (1) zum Senden nach Anspruch 1, wobei mehrere Sendeleistungsmasken (mqa_A) definiert und periodisch ausgewählt werden.

**7.** Verfahren (1) zum Senden nach Anspruch 1, wobei die Anpassung der Sendeleistungsmaske eine periodische Änderung der Echofunktion berücksichtigt, indem sie für eine gegebene Frequenz einen minimalen Wert in der Periode der Gesamtheit von Echofunktionen berücksichtigt.

8. Verfahren (1) zum Senden nach Anspruch 1, wobei die angepasste Leistungsmaske bestimmt wird, indem zu einer starren Sendeleistungsmaske ($mqf_2\_A$) eine geschätzte Leistung des Echos hinzugefügt wird.

9. Verfahren (1) zum Senden nach Anspruch 1, wobei die angepasste Leistungsmaske bei allen Frequenzen oder einem Teil derselben auf einen maximalen Wert begrenzt ist.

10. Verfahren (1) zum Senden nach Anspruch 1, wobei die angepasste Sendeleistung durch eine Spanne begrenzt ist, die einen Schätzfehler der Echofunktion berücksichtigt.

11. Sendevorrichtung ($Ea_A$) eines Mehrträgersignals, welche eine Sendeleistungsmaske einsetzt, wobei das gesendete Signal über einen Übertragungskanal übertragen wird, der die Sendevorrichtung ($Ea_A$) von einem entfernten Empfänger ($RE_B$) trennt, und welche wenigstens umfasst:

- ein Sendemodul ($EME_A$) zum Senden eines Signals;
- ein Empfangsmodul ($REC_{AA}$), das dafür ausgelegt ist, ein Echo zu empfangen, das dem gesendeten Signal entspricht;
- ein Modul zur Schätzung ($EST_{AA}$) einer Echofunktion ($h'_{AA}$), die ein Echo charakterisiert, das auf die Reflexion eines Teils der Leistung des gesendeten Signals zurückzuführen ist; und
- ein Modul zur Anpassung ($MAS_A$) der Leistungsmaske, das dafür ausgebildet ist, die Leistungsmaske in Abhängigkeit von der Schätzung der Echofunktion zu erhöhen, um den Leistungsverlust aufgrund des Echos zu berücksichtigen.

12. Sendevorrichtung nach Anspruch 11, wobei das Sendemodul dafür ausgebildet ist, eine bekannte Sequenz (Seq) zu dem Übertragungskanal zu senden, wobei das Empfangsmodul ($REC_{AA}$) dafür ausgelegt ist, das Echo der Sequenz zu empfangen, und das Schätzmodul dafür ausgebildet ist, die Echofunktion durch Berechnen des Verhältnisses zwischen der bekannten Sequenz und dem Echo der Sequenz zu schätzen.

13. Telekommunikationssystem (SYS), welches eine Sendevorrichtung ($Ea_A$) nach Anspruch 11 und eine entfernte Empfangsvorrichtung ($ER_B$) umfasst, wobei der Übertragungskanal (CT) die Sendevorrichtung und den entfernten Empfänger trennt.

**Claims**

1. Method (1) for sending a multicarrier signal using a send power mask, the signal sent ($Se_A$) being transmitted by a transmission channel (CT) separating a sender device ($Ea_A$) having means of reception ($REC_{AA}$) from a remote receiver ($RE_B$), which comprises:

- adapting (4) the send power mask by increasing it as a function of the estimation of an echo function characterizing an echo due to the reflection of a part of the power of a signal sent by the sender device and received by said reception means, so as to take account of the power lost because of the echo.

2. Sending method (1) according to Claim 1, furthermore comprising:

- sending (2) a known sequence (Seq) by the sender device ($Ea_A$), for transmission by the transmission channel,
- estimating (3) the echo function by evaluating the ratio between the known sequence sent and the sequence received by the reception means.

3. Sending method (1) according to Claim 2, in which the sending of the known sequence (Seq), the estimation of the echo function the adaptation of the power mask are performed regularly at instants determined in conjunction with the instants of sending of a communication signal by the sender device ($Ea_A$).

4. Sending method (1) according to Claim 1, in which the known sequence (Seq) corresponds to all or part of a communication signal sent by the sender device ($Ea_A$).

5. Sending method (1) according to Claim 1, in which the send power mask ($mqa\_A$) is adapted per carrier.

6. Sending method (1) according to Claim 1, in which several send power masks ($mqa\_A$) are defined and selected in a periodic manner.

7.  Sending method (1) according to Claim 1, in which the adaptation of the send power mask takes account of a periodic variation of the echo function, by taking into account, for a given frequency, a minimum value over the period of the set of echo functions.

8.  Sending method (1) according to Claim 1, in which the adapted power mask is determined by adding to a fixed send power mask ($mqf_2\_A$) an estimated power of the echo.

9.  Sending method (1) according to Claim 1, in which the adapted power mask is bounded to a maximum value on all or part of the frequencies.

10. Sending method (1) according to Claim 1, in which the adapted send power is limited by a margin taking into account an error of estimation of the echo function.

11. Sender device ($Ea_A$) for sending a multicarrier signal implementing a send power mask, the signal sent being transmitted by a transmission channel separating the sender device ($Ea_A$) from a remote receiver ($RE_B$), which comprises at least:

    - a send module ($EME_A$) for sending a signal;
    - a receive module ($REC_{AA}$) adapted for receiving an echo corresponding to the signal sent;
    - an estimation module ($EST_{AA}$) for estimating an echo function ($h'_{AA}$) characterizing an echo due to the reflection of a part of the power of the signal sent; and
    - an adaptation module ($MAS_A$) for adapting the power mask and configured to increase said power mask as a function of the estimation of the echo function, so as to take account of the power lost because of the echo.

12. Sender device according to Claim 11, in which the send module is configured to send a known sequence (Seq) to the transmission channel, the receive module ($REC_{AA}$) is adapted for receiving the echo of said sequence, and the estimation module is configured to estimate the echo function by evaluating the ratio between the known sequence and the echo of said sequence.

13. Telecommunication system (SYS) comprising a sender device (EaA) according to Claim 11 and a remote receiver device (ERB), the transmission channel (CT) separating the sender device and the remote receiver.

**Fig. 1**

**Fig. 3**

**Fig. 5**

Fig. 2

Fig. 6

**Fig. 4a**

**Fig. 4b**

**Fig. 4c**

Fig. 7a

Fig. 7b

Fig. 7c

**RÉFÉRENCES CITÉES DANS LA DESCRIPTION**

**Documents brevets cités dans la description**

- WO 2005071853 A